Europäisches Patentamt

European Patent Office

Office européen des brevets

(19)

(11) Veröffentlichungsnummer: **0 031 154**
**A1**

(12) # EUROPÄISCHE PATENTANMELDUNG

(21) Anmeldenummer: 80108050.8

(22) Anmeldetag: 19.12.80

(51) Int. Cl.³: **E 02 D 29/02**
**E 01 F 8/00, E 02 D 17/20**
**A 01 G 9/00**

(30) Priorität: 20.12.79 DE 2951485

(43) Veröffentlichungstag der Anmeldung:
01.07.81 Patentblatt 81/26

(84) Benannte Vertragsstaaten:
AT BE CH FR GB LI LU NL

(71) Anmelder: Neumann, Herwig
Karl-Benz-Strasse
D-7521 Forst / Baden(DE)

(72) Erfinder: Neumann, Herwig
Karl-Benz-Strasse
D-7521 Forst / Baden(DE)

(74) Vertreter: Raeck, Wilfrid, Dipl.-Ing.
Moserstrasse 8
D-7000 Stuttgart 1(DE)

(54) Bauelementsystem zur Erstellung bepflanzbarer Wände.

(57) Bauelementsystem bei dem quer zum Hang verlaufende Stützböcke (13) gestapelt und dazwischen in vordere Ausnehmungen der Stützböcke winklige Längselemente (10) eingesetzt werden, die sich über benachbarte Stützbockstapel hinauserstrecken. Die Stapel können je nach zu berücksichtigender Statik und Transport- und Verlegemöglichkeiten aus einer Mehrzahl einzelner Stützböcke (13) oder einer fundamentierten, geneigten Profil, stütze (40) aufgebaut werden. Zur Erhöhung des Reibschlusses zwischen übereinandergesetzten Stützböcken (13) werden auf der Etagenhöhe eines verkürzten Stützbockes (10) benachbarte Stützbockstapel überspannende Längselemente (10) zur Bildung von das Erdreich-Auflastgewicht übertragenden Trögen auf einen unteren Stützbock aufgelegt und unter Verwendung von Abstandshaltern durch den nächst höheren Stützbock überdeckt.

Fig.1a

Fig.1b

Fig.1c

Fig.1d

DIPL.-ING. WILFRID RAECK

PATENTANWALT

7 STUTTGART 1, MOSERSTRASSE 8 · TELEFON (0711) 244003

0031154

Herwig Neumann

7521 Forst / Baden

## Bauelementsystem zur Erstellung bepflanzbarer Wände

Die Erfindung betrifft ein Bauelementsystem zur Erstellung bepflanzbarer Mauern, Lärmschutzwälle, Hangabstützungen oder Einfriedungen, bestehend aus quer zur Mauerlängsrichtung mit ebenen Ober- und Unterseiten übereinandergestapelten Stützböcken als Abstandshalter zwischen einzelne Bepflanzungsetagen bildenden Längselementen, die aus einer Bodenplatte sowie einem winklig daran angeschlossenen Brüstungsteil bestehen und jeweils auf zwei Stützböcken aufliegen.

Ein derartiges Bauelementsystem ist aus der DE-AS 25 19 232 bekannt und soll erfindungsgemäß dahin weiter ausgestaltet werden, daß es sich gleichermaßen gut sowohl im gärtnerischen Bereich für kleinere Hangabstützungen oder Einfriedungen als auch auf Großbaustellen zur Errichtung großer Hangstützbauwerke, Lärmschutzwänden oder -wällen anwenden läßt. Dabei sollen bepflanzbare, beliebig geneigte, gegebenenfalls auch senkrechte Mauern oder Wälle erstellt werden können, die eine Anpassung an gegebene Terrainhöhenänderungen und auch an Kurven gestattet.

-/-

- 2 -

Zur Lösung dieser Aufgabe ist das Bauelementsystem der
eingangs bezeichneten Art erfindungsgemäß dadurch gekennzeichnet, daß die stapel-bildenden Stützböcke, deren
Abstand zwischen der Oberseite und der Unterseite einem
bestimmten Höhentaktmaß angepaßt ist, das im wesentlichen
dem kleinsten Hüllmaß des Längselementprofils entspricht,
eine Höhe aufweisen, die in Abhängigkeit von den jeweils
vorliegenden Bedingungen der Statik, rationellen Herstellung, Transport- und Verlegemöglichkeiten dem Einfachen oder Vielfachen des Höhentaktmaßes entspricht,
und bei vorgeplanter Böschungsneigung durch eine entsprechend geneigte Profilstütze ersetzt sind, deren
unteres Ende in einem Fundament aus Ortbeton verankert
ist.

Aufgrund dieses Vorschlages ergeben sich für aus einer
Mindestzahl grundlegender Formen herstellbare, vorgefertigte
Bauelemente äußerst vielseitige Anwendungsmöglichkeiten,
wobei die Form der winkligen Längselemente durchweg
gleich bleibt und nur die Form der abstandshaltenden
Stützböcke geändert zu werden braucht. Die Formänderungen
der Stützböcke sind nicht grundsätzlich bedingt, da
praktisch jede Art von Hangabstützungen und freistehenden
Wällen mit Stützböcken erreicht werden kann, die dem
einfachen Höhentaktmaß entsprechen.

Diese einfachsten, verhältnismäßig niedrigen Stützböcke
lassen sich leicht herstellen und als Fertigteile
einfach handhaben, transportieren und gegebenenfalls
auch von Hand verlegen. Sie sind darüberhinaus in solchen
Fällen unerlässlich, wenn die Bedingungen an der Baustelle
nicht im vorraus vermessungstechnisch erfaßt werden

-/-

konnten und erst an der Baustelle eine Anpassung an die
dort vorhandenen Voraussetzungen an die Art des zu hinterfüllenden Bodens sowie an den Verlauf des Terrains und
die Hangneigung erforderlich ist.

Bei höheren oder längeren Erdbauwerken jedoch kann diese
angepaßte bzw. individuelle Verlegeart für die Fertigteile des Bauelementsystems dann zu arbeitsaufwendig
und kostentreibend sein, wenn eine ausreichende Vorplanung zur Verfügung steht und Baukräne eingesetzt
werden können. Um solche Maschinen besser auszunutzen,
werden zur Bildung der in den Hang hineinragenden
Schottungswände bzw. Stützbockstapel Stützböcke verwendet,
deren Höhe einem Vielfachen des Höhentaktmaßes entspricht.
Durch die damit einhergehende Verringerung der Anzahl
von Fugen innerhalb jeder Schottungswand wird das entsprechende Bauwerk in sich und gegenüber den in den
verschiedensten Richtungen auftretenden Erddruckkräften
sicherer und widerstandsfester. Gleichzeitig gewährleistet die immer noch vorhandene, mit Bezug auf die
Mehrzahl der für jeden Stapel bzw. jede Schottungswand
verwendeten Stützböcke eine günstige Verlegeweise, die
auf das Einfüllen von Erdreich zwischen die Schottungswände und auch auf das Hinterfüllen der Längselemente
zeitlich abgestimmt werden kann.

Eine noch kostensparendere und auch statisch günstige
Bauweise der Hangabstützung oder eines freistehendes
Lärmschutzwalls ist mit dem erfindungsgemäßen Bauelementsystem möglich, wenn eine vollständige Vorplanung
durchgeführt werden konnte und die Böschungsneigung
festliegt, indem man die Stützbockstapel durch eine
entsprechend geneigte Profilstützen ersetzt, deren Fuß
in einem Fundament aus Ortbeton verankert wird.

Hierbei wird selbst die bei einem hohen Stützbock noch
vorhandene unterste Fuge durch die Einbindung der Stütze
in das Fundament vermieden. Statisch ist die sich über
die gesamte Höhe der Mauer oder Wand erstreckende Stütze
insofern günstig, als sämtliche Erddruckkräfte, also
auch solche, die aus einem unteren Bereich des Hanges
aufwärts wirken, über die Profilstütze in das Fundament
abgeleitet und dort aufgenommen werden. Maßnahmen zur
Erhöhung des Reibschlusses zwischen den übereinandergestapelten Stützböcken sind nicht mehr erforderlich. Da
die Profilstütze in eine Verankerung im Fundament fest
eingebunden ist, ergibt sich eine ähnliche Wirkung wie
bei einer üblichen Winkelstützmauer, die mit einem unteren
verbreiterten Fundament in den Hang hineinragt. Somit
sind die Profilstützen in der Lage, auch die über die
in ihr gehalterten, Pflanzetagen bildenden Längselemente
eingeleiteten Erddruckkräfte abzufangen.

Ein grundlegendes vorteilhaftes Merkmal des erfindungsgemäßen Bauelementsystems liegt in der Längsunterteilung
der Wand oder Hangabstützung, insbesondere in deren
durch die Stützbockstapel oder Profilstützen gebildeten
Auflageanordnung. Bei z. B. 5 m langen Längselementen
sind zwei Stützbockstapel an den statisch günstigsten
Stellen, d. h. in gleichmäßigen Abständen von den Enden
der Längselemente aus angeordnet. Innerhalb eines solchen
5-Meter-Taktes ergeben sich durch die Stützbockstapel
abgeschlossene Schottungen und Mauerbereiche, die vom
nächsten 5-Meter-Takt unabhängig sind und daher etwaigen
Hangbewegungen einzeln ausgesetzt sind bzw. folgen können,
ohne nicht beteiligte, benachbarte Wandtakte in Mitleidenschaft zu ziehen.

- 5 -

Bei einer Ausführungsform des erfindungsgemäßen Bauelementsystems besitzen die Stützböcke eine ihrer Stirnseite benachbarte obere Auflagefläche für die Längselemente, die im Höhentaktmaß parallel zur Unterseite
verläuft. Wenn die Höhe der Stützböcke dem einfachen
Höhentaktmaß entspricht, sind somit die obere Längselement-Auflagefläche und die Oberseite bündig. Solche
einfachen Stützböcke finden bei niedrigen Hangabstützungen
oder Einfriedungen Anwendung, wo der Reibschluß zwischen
Längselement und Stützbock ausreicht, um das hinterfüllte Erdreich festzuhalten.

Bei Anwendung für Hangabstützungen mit größeren Erdkräften
kann zwischen der Stirnseite und der oberen Auflagefläche
der Stützböcke ein aufwärts gerichteter Vorsprung angeformt sein, an dem das Längselement anliegt.

Wenn gemäß einem weiteren Merkmal die Höhe des Vorsprungs
am Stützbock dem Höhentaktmaß abzüglich der Brüstungs-
wandstärke eines Längselementes entspricht, können zur
Vergrößerung der freien Oberfläche des Erdreiches in
den Bepflanzungsetagen bei gleichem Etagenabstand die
Längselemente mit ihrem längeren Brüstungsteil nach vorn
und mit ihrer Bodenplatte nach unten gerichtet so angeordnet werden, daß das Stirnende der Bodenplatte gegen
die Längselement-Auflagefläche weist und der Brüstungsteil
auf dem oberen, verlängerten Vorsprung der Stützböcke
aufliegt. Aufgrund dieses Vorschlages ergeben sich
besonders günstige Schallabsorptionswerte bei einem
derart aufgebauten Lärmschutzwall oder einer Lärmschutzwand. Darüberhinaus tragen auch die lamellenartig
übereinander angeordneten vorspringenden Brüstungsteile
zur Schallabsorption bei, die mit der darunter befindlichen

-/-

bepflanzten Erdfläche Kammern bilden, in denen sich der
Schall totläuft.

Wenn die Höhe der Stützböcke dem zweifachen Höhentaktmaß
entspricht, befindet sich die Längselement-Auflagefläche
jeweils im Abstand eines Höhentaktmaßes zwischen der
Oberseite und der Unterseite des jeweiligen Stützbockes.
Vorzugsweise befindet sich die Auflagefläche innerhalb
einer nach oben offenen Aufnahme, die nach vorn durch
den aufwärts gerichteten Vorsprung begrenzt ist, wobei
die Länge der Aufnahme der Profillänge der Bodenplatte
des Längselementes angepaßt sein kann. Zur zusätzlichen
Abstützung des Längselementes kann die Aufnahme an
ihrem hangseitigen Ende teilweise vom oberen Bereich
des Stützbockes überdeckt sein, so daß ein am Brüstungsteil erfaßtes, beispielsweise an einem Kran frei hängendes
Längselement leicht über die Auflagefläche gebracht und
auf diese aufgesetzt werden kann.

Zur Erstellung von freistehenden Mauern oder Wällen
können je nach Wandneigung gleichlange oder in höheren
Etagen verkürzte Stützböcke beidseitig mit Auflageflächen,
mit aufwärtsgerichteten Vorsprüngen und gegebenenfalls
mit unteren, zur Frontseite hin offenen Ausnehmungen
versehen sein, die etwa dem Verlauf und der Wandstärke
des oberen Endes des Brüstungsteils des darunterliegenden
Längselementes angepaßt ist.

Zur Erhöhung des Reibschlusses zwischen den in einem
Stapel übereinanderliegenden Stützböcken können diese
unter Zwischenfügung von Zementmörtel verlegt werden.
Weiterhin wird für den gleichen Zweck unter Ausnutzung
der aufeinander abgestimmten Maße des erfindungsgemäßen

- 7 -

Bauelementsystems vorgeschlagen, daß in Abhängigkeit von den Eigenschaften des abzufangenden Erdreiches auf der Etagenhöhe eines verkürzten Stützbockes mit einfachem Höhentaktmaß benachbarte Stützbockstapel überspannende Längselemente zur Bildung von das Erdreich-Auflastgewicht übertragenden Trögen mit dem Brüstungsteil flach auf einen unteren Stützbock aufgelegt und unter Verwendung von Abstandshaltern durch den nächst höheren Stützbock überdeckt sind. Die im vorderen Bereich der Stützböcke aufliegenden Längselemente beschweren durch ihr Eigengewicht und durch das auf ihnen lastende Erdreich die Stützböcke. Um diese Erhöhung des Auflastgewichtes auch im rückwärtigen, im Hang eingebundenen Bereich zu erzielen, werden somit dort in einer oder mehreren Etagen flachgelegte Längselemente eingesetzt, die den auf ihnen lastenden Erddruck nach unten übertragen. Dem gleichem Zweck können auch im Hüllmaß mit Beton und Armierung gefüllte bzw. ausgegossene Längselemente dienen.

Weiterhin ist erfindungsgemäß vorgesehen, daß innerhalb einer Hangabstützung oder eines Walles Profilstützen und auch Stützbockstapel als Auflage für die Längselemente verwendet werden. Eine solche Kombination ist beispielsweise am Ende eines Lärmschutzwalles, in Kurvenführungen oder bei Anbindung eines Walles an einen Hang sinnvoll.

Gemäß einem weiteren Vorschlag können an dem auf Stützböcken aufliegenden Schenkel (Brüstungsteil oder Bodenplatte) der Längselemente aus der Schenkelebene vorspringende Anschläge, vorzugsweise in Form von Kranhebeschlaufen an solchen Stellen angeformt sein, die sich an den benachbarten Innenseiten und/oder Außenseiten zweier aufeinanderfolgender Stützbockstapel befinden.

-/-

Beim Einfüllen von Erdreich in eine zwischen zwei Stützbockstapeln gebildete Schottung hat sich zuweilen gezeigt,
daß die Stützböcke sich während der Verfestigung des
Erdreiches verschieben. Die angeformten Kranhebeschlaufen
dienen somit gleichzeitig als Sicherungsanschlag, so
daß in jeder Etage ein durch Stützböcke und Längselement
gebildetes, in sich zusammenhängendes und verfestigtes
System entsteht, das dennoch flexibel genug ist, um
sich an etwaige Setzungen anpassen zu können, ohne zu
Bruch zu gehen.

Ausführungsbeispiele der Erfindung sind nachfolgend in
Verbindung mit den Zeichnungen näher erläutert. Es zeigen

Fig. 1a - d      verschiedene Stützböcke im einfachen
            Höhentaktmaß,

Fig. 2a - d      Stützböcke wie in Fig. 1 zur Bildung
            freistehender Wände,

Fig. 3a - c      Stützböcke im zweifachen Höhentaktmaß,

Fig. 4a - c      Stützböcke wie in Fig. 3, jedoch zur
            Bildung von freistehenden Wänden,

Fig. 5a - h      schematisch verschiedene Profile von
            Hangabstützungen oder freistehenden
            Wänden unter Verwendung von Stützböcken
            im einfachen Höhentaktmaß,

Fig. 6a - g      Profile von Hangabstützungen oder freistehenden Wänden mit Stützböcken im
            zweifachen Höhentaktmaß,

Fig. 7          eine andere Stützbockkombination,

Fig. 8          einen schematischen senkrechten Schnitt
                durch eine Hangabstützung mit im Hang
                eingebauten Auflasttrögen,

Fig. 9          eine Profilstütze mit Verankerungsfundament,

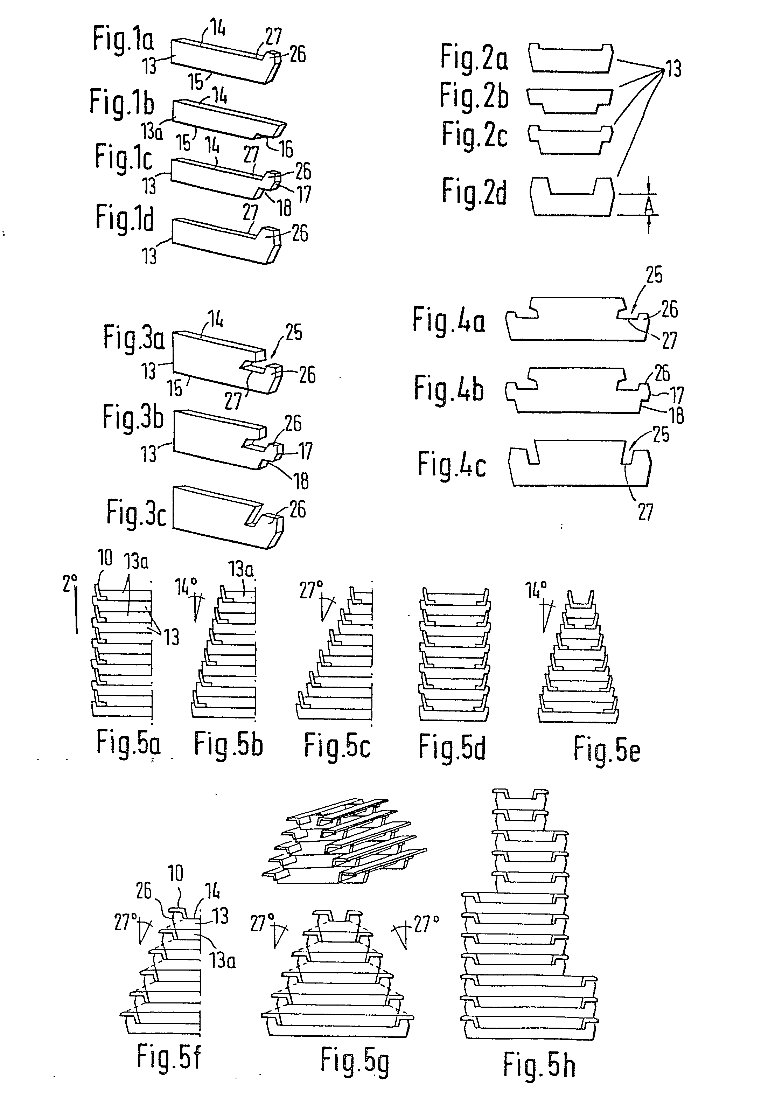

                Vorder-ite
Fig. 1oa,b      eine perspektivische Ansicht eines frei-
                stehenden, bepflanzbaren Walles, und

Fig. 11         eine bevorzugte Profilform für Längselemente.

Die in den Fig. 1 und 2 gezeigten Stützböcke 13 entsprechen
dem einfachen Höhentaktmaß und dienen zur Erstellung von
Stützbockstapeln oder Schottungswänden für Hangabstützungen
und freistehende Wälle entsprechend den Beispielen in
Fig. 5. Jeder Stützbock 13 besitzt eine ebene Oberseite 14
und eine ebene Unterseite 15, die im Abstand eines Höhentaktmaßes zueinander stehen. Am vorderen Ende der Stützböcke 13 nach Fig. 1a, b und c ist ein nach oben gerichteter
Vorsprung 26 angeformt, der die mit der Oberseite 14
bündige Auflagefläche 27 für das aufzunehmende Längselement 1o nach vorn begrenzt. Der Stützbock 13a nach
Fig. 1b enthält eine untere, nach vorn offene Ausnehmung
16, die der zu überfassenden Bodenplatte 11 des Längselementes (Fig. 11) angepaßt ist. Der Stützbock 13a
liegt mit seiner Unterseite 15 auf der Oberseite eines
Stützbockes 13 auf.

Zur Erstellung von Hangabstützungen oder freistehenden
Mauern mit senkrechten Wänden enthält der Stützbock 13
nach Fig. 1c an seiner Stirnseite 17 unterhalb des Vorsprungs 26 eine Ausnehmung 18, in der entsprechend Fig. 5d
der obere Bereich des Brüstungsteils des darunterliegenden
Längselementes 1o aufgenommen wird. Beim Stützbock 13
entsprechend Fig. 1d ist der Vorsprung 26 in Tiefenrichtung verlängert, der als Auflagefläche für den
Brüstungsteil 1o bei einer Schallschutzwand z. B. nach
Fig. 5f dient. Hierbei sind die Längselemente so angeordnet,
daß ihr längerer Brüstungsteil 12 nach vorn und ihre
Bodenplatte 11 nach unten gegen die Auflagefläche 27
weist.

Die an beiden Enden mit Auflageflächen, Vorsprüngen und
Ausnehmungen versehenen Stützböcke 13 nach Fig. 2a - d
haben die gleiche Funktion wie die Stützböcke nach Fig. 1
und werden vorzugsweise bei der Erstellung von freistehenden
Mauern oder Wällen benutzt. Die Längen der Stützböcke
werden den jeweiligen Einsatzstellen entsprechend angepaßt.

Die Fig. 3 und 4 zeigen Stützböcke mit dem zweifachen
Höhentaktmaß, die in ihrer Form dadurch entstehen, daß
man die Stützböcke 13 und 13a beispielsweise nach Fig. 1a
und 1b miteinander kombiniert. Der Stützbock 13 nach
Fig. 3a enthält eine Längslement-Auflagefläche 27, die
jeweils im Abstand eines Höhentaktmaßes zwischen der
Oberseite 14 und der Unterseite 15 angeordnet ist. Die
Auflagefläche 27 bildet den Boden einer nach oben offenen
Aufnahme 25, die nach vorn durch den Vorsprung 26 begrenzt ist und eine Länge aufweist, die der Profillänge
der Bodenplatte 11 des Längselementes angepaßt ist.

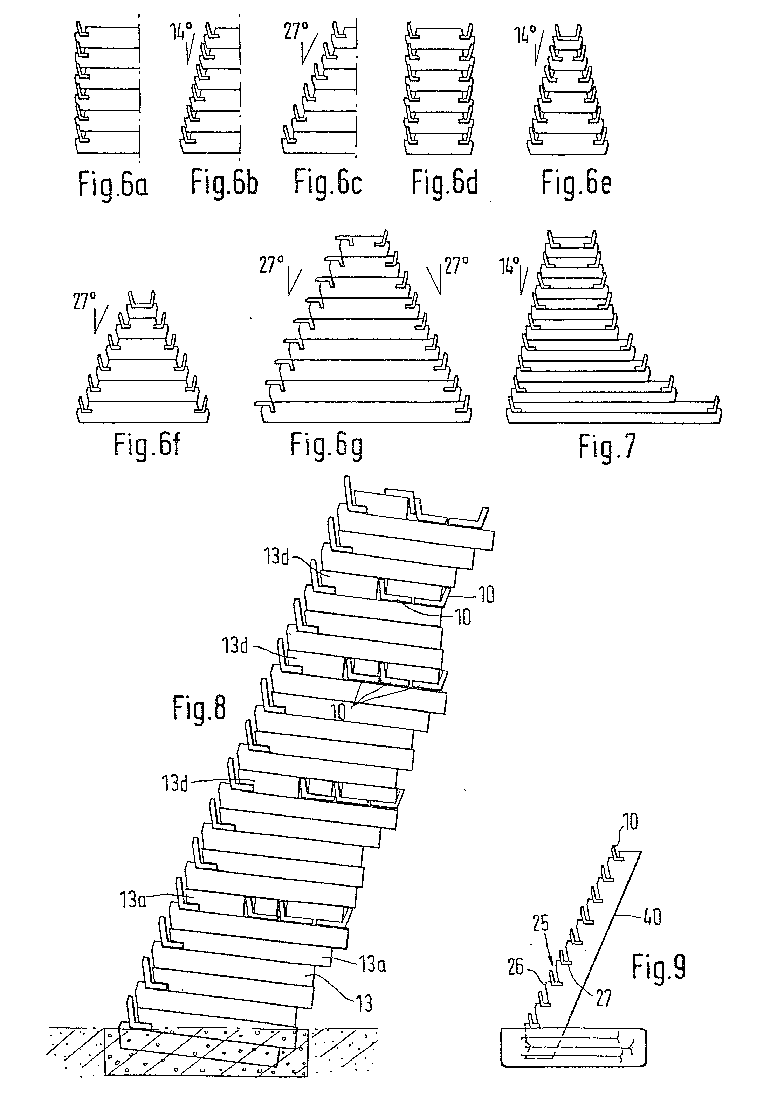

Die Aufnahme 25 ist an ihrem hangseitigen Ende nur so weit von dem oberen Bereich des Stützbockes überdeckt, daß ein am Brüstungsteil erfaßtes, freihängendes Längselement mit einem Hebezeug frei über die Auflagefläche 27 bewegt und auf diese aufgesetzt werden kann, ohne zusätzliche Schubkräfte anwenden zu müssen. Der Stützbock 13 nach Fig. 3b enthält an seiner Stirnseite 17 eine Ausnehmung 18 wie der Stützbock nach Fig. 1c, um bei einer senkrecht verlaufenden Wand nach Fig. 6a die Oberseite des Brüstungsteils des darunterliegenden Längselementes aufzunehmen.

Der Stützbock 13 nach Fig. 3c enthält hinter dem ähnlich Fig. 1d in Tiefenrichtung verlängerten Vorsprung 26 eine Aufnahme für die Bodenplatte 11 eines flachgelegten Längselementes entsprechend der in Fig. 6g gezeigten Anordnung. Die beidseitig mit Aufnahmen versehenen Stützböcke nach Fig. 4a - 4c haben die gleiche Funktion und werden für freistehende Mauern oder Wälle z. B. nach Fig. 6d - 6g benutzt.

Fig. 7 dient als Anschauungsbeispiel, daß nicht nur Hangabstützungen, sondern auch freistehende Wände mit dem erfindungsgemäßen Bauelementsystem in veränderlicher Neigung erstellt werden können. Die in diesem Beispiel gezeigten Stützböcke im einfachen Höhentaktmaß sind insofern vorteilhaft, als die die Bodenplatte der Längselemente überfassenden oberen Stützböcke 13a vollständig im aufgefüllten Erdreich verschwinden.

Das in Fig. 8 gezeigte Beispiel einer Hangabstützung veranschaulicht den aus einer Vielzahl von Stützböcken unterschiedlicher Länge gebildeten Stützbockstapel, bei dem der unterste Stückbock in ein Betonfundament eingelassen ist. Um den Reibschluß zwischen der Folge der Stützböcke zu erhöhen, sind auf der Höhe eines verkürzten
Stützbockes 13d des einfachen Höhentaktmaßes zwei Längselemente 1o zur Bildung eines Troges flach auf den
darunterliegenden Stützbock aufgelegt. Die Längselemente
überspannen zwei benachbarte Stützbockstapel und sind,
unter Verwendung von nicht gezeigten Abstandshaltern,
durch den nächst höheren Stützbock überdeckt.

Entsprechend Fig. 9 enthält eine geneigte Profilstütze
an ihrer Frontseite in mit dem Höhentaktmaß abgestimmten
Abständen Aufnahmen 25 mit Auflageflächen 27 für die
Längselemente und mit nach vorn gerichteten Vorsprüngen 26.
Das untere Ende der Stütze ist in einem Fundament verankert,
das geeignete Schlaufen aus Armierungsstahl enthält. Bei
freistehenden Mauern oder Lärmschutzwällen können jeweils
zwei Profilstützen in entgegengesetzter Neigung aufgestellt
und in Fundamenten verankert werden.

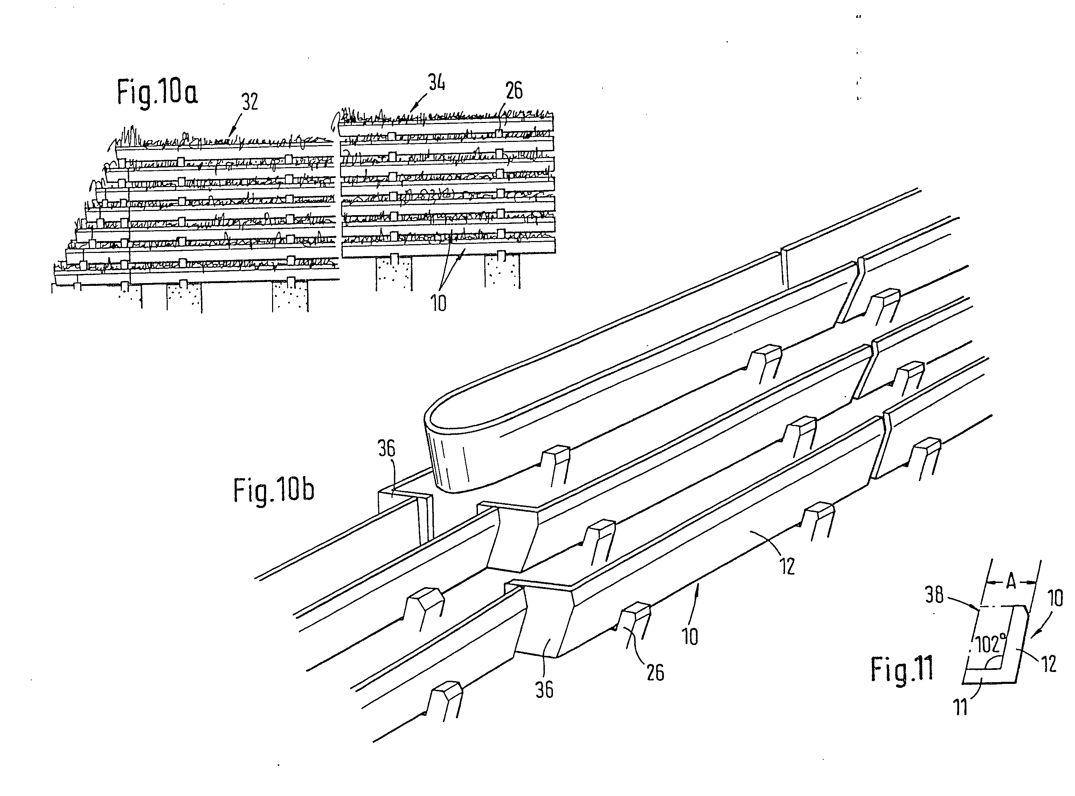

Die ein besonderes Merkmal der Erfindung bildenden Längentakte, in denen die Längselemente 10 mit je zwei Stützbockstapeln oder Profilstützen 4o verlegt werden, sind in Fig. 10a
veranschaulicht. Die beiden Längentakte 32,34 sitzen auf
Fundamenten, die entsprechend dem Terraingefälle in unterschiedlichen Höhen angeordnet sind. An der linken Seite von Fig. 10a sind
abgerundete Längselemente auf radial verlaufenden Stützbockstapeln aufgelegt, die sich hier an den Fugen befinden und je
zwei benachbarte Längselemente unterstützen. In der Perspektive nach Fig. 1Ob sind die bei einem Tiefenversatz zwischen
benachbarten Längstakten an den Enden der Längselemente angeformten Abschlußwände36 sichtbar. Diese Abschlußwände haben
auch bei einem Anschluß der Hangabstützung an eine Treppe o.dgl.
die Aufgabe, das hinterfüllte Erdreich voll zu umfassen.
Obere Trogelemente sichern die darunter liegenden obersten
Längselemente gegen Kippgefahr bei unachtsamem Begehen des
Walls

- /3 -

Fig. 11 zeigt das Profil einer bevorzugten Ausführungsform
eines Längselementes, bei Bodenplatte 11 und Brüstungsteil 12
einen Winkel von 102$^{o}$ einschließen. Dennoch sind auch Winkel
von 70$^{o}$ oder 90$^{o}$ möglich, ohne daß dazu die Stützböcke nennenswert abgeändert werden müssen. Das mir unterbrochenen Linien
angdeutete Hüllprofil 38 in Parallelogrammform besitzt ein
kleinstes Hüllmaß A, das ungefähr gleich oder etwas kleiner ist
als das Höhentaktmaß der Stützböcke 13.

Herwig Neumann
7521 Forst / Baden

A n s p r ü c h e

1. Bauelementsystem zur Erstellung bepflanzbarer Mauern,
Lärmschutzwälle, Hangabstützungen oder Einfriedungen,
bestehend aus quer zur Mauerlängsrichtung mit ebenen
Ober- und Unterseiten übereinandergestapelten Stützböcken als Abstandshalter zwischen einzelne Bepflanzungsetagen bildenden Längslementen, die aus
einer Bodenplatte sowie einem winklig daran angeschlossenen Brüstungsteil bestehen und jeweils auf
zwei Stützböcken aufliegen,
dadurch gekennzeichnet,
daß die stapel-bildenden Stützböcke (13), deren Abstand zwischen der Oberseite und Unterseite einem
bestimmten Höhentaktmaß (H) angepaßt ist, das im
wesentlichen dem kleinsten Hüllmaß (A) des Längselementprofils entspricht, eine Höhe aufweisen, die in Abhängigkeit von den jeweils vorliegenden Bedingungen
der Statik, rationellen Herstellung, Transport- und
Verlegemöglichkeiten dem Einfachen oder Vielfachen
des Höhentaktmaßes (H) entspricht und bei vorgeplanter
Böschungsneigung durch eine entsprechend geneigte
Profilstütze (4o) ersetzt sind, deren unteres Ende
in einem Fundament aus Ortbeton verankert ist.

-/-

2. Bauelementsystem nach Anspruch 1, dadurch gekennzeichnet, daß die Stützböcke (13) eine ihrer Stirnseite (17)
   benachbarte obere Auflagefläche (27) für die Längselemente (1o) aufweisen, die im Höhentaktmaß parallel
   zur Unterseite (15) verläuft.

3. Bauelementsystem nach Anspruch 2, dadurch gekennzeichnet, daß die Höhe der Stützböcke (13) dem einfachen
   Höhentaktmaß entspricht und somit die obere Längselement-Auflagefläche (27) und die Oberseite (14)
   bündig sind.

4. Bauelementsystem nach Anspruch 3, dadurch gekennzeichnet, daß zwischen der Stirnseite (17) und der oberen
   Längselement-Auflagefläche (27) der Stützböcke ein
   aufwärts gerichteter Vorsprung (26) angeformt ist.

5. Bauelementsystem nach Anspruch 3, dadurch gekennzeichnet, daß die Höhe des Vorsprungs (26) dem Höhentaktmaß abzüglich der Brüstungs-Wandstärke eines
   Längselementes (1o) entspricht.

6. Bauelementsystem nach Anspruch 2, dadurch gekennzeichnet, daß zusätzliche Stützböcke (13a) mit einfachem
   Höhentaktmaß mit einer unteren, nach vorn offenen
   Ausnehmung (16) zum Überfassen der Bodenplatte (11)
   des Längselementes versehen sind.

7. Bauelementsystem nach Anspruch 4, dadurch gekennzeichnet, daß die mit der oberen Längselement-Auflagefläche
   (27) und dem vorderen Vorsprung (26) versehenen
   Stützböcke (13) an ihrer Stirnseite (17) unterhalb
   des Vorsprungs eine Ausnehmung (18) enthalten, die
   im wesentlichen dem Verlauf und der Wandstärke des
   oberen Endes des Brüstungsteils (12) der Längselemente
   (1o) angepaßt ist.

8. Bauelementsystem nach Anspruch 1, dadurch gekennzeichnet, daß Brüstungsteil (12) und Bodenplatte (11) der Längselemente einen Winkel im Bereich zwischen ca. 7o° und 11o°, vorzugsweise von ungefähr 1oo° einschließen und daß die Stirnseite der Bodenplatte (11) parallel zur Richtung des Brüstungsteils (12) verläuft.

9. Bauelementsystem nach einem der vorhergehenden Ansprüche, dadurch gekennzeichnet, daß zur Vergrößerung der freien Oberfläche des Erdreiches in den Bepflanzungsetagen bei gleichem Etagenabstand die Längselemente (1o) mit ihrem längeren Brüstungsteil (12) nach vorn und mit ihrer Bodenplatte (11) nach unten gerichtet so angeordnet sind, daß das Stirnende der Bodenplatte gegen die Längselement-Auflagefläche (27) weist und die Innenseite des Brüstungsteils auf dem oberen, in Tiefenrichtung verlängerten Vorsprung (26) der Stützböcke aufliegt.

1o. Bauelementsystem nach Anspruch 1, dadurch gekennzeichnet, daß die Höhe der Stützböcke (13b) dem zweifachen Höhentaktmaß entspricht und somit die Längselement-Auflagefläche (27) jeweils im Abstand eines Höhentaktmaßes zwischen der Oberseite (14) und der Unterseite (15) der Stützböcke angeordnet ist.

11. Bauelementsystem nach Anspruch 1o, dadurch gekennzeichnet, daß die Längselement-Auflagefläche (27) die Bodenfläche einer nach oben offenen Aufnahme (25) bildet, die nach vorn durch den aufwärts gerichteten Vorsprung (26) begrenzt ist.

12. Bauelementsystem nach Anspruch 11, dadurch gekennzeichnet, daß die Länge der Aufnahme (25) der Profillänge der Bodenplatte (11) des Längselementes angepaßt ist.

13. Bauelementsystem nach Anspruch 11, dadurch gekennzeichnet, daß die Aufnahme (25) an ihrem hangseitigen
Ende nur so weit von dem oberen Bereich des Stützbockes überdeckt ist, daß ein am Brüstungsteil (12)
erfaßtes, freihängendes Längselement (1o) frei über
die Auflagefläche (27) bewegbar und auf diese aufsetzbar ist.

14. Bauelementsystem nach einem der vorhergehenden Ansprüche, dadurch gekennzeichnet, daß zur Erstellung
von freistehenden Mauern oder Wällen gleichlange oder
in den höheren Etagen verkürzte Stützböcke (13) beidseitig mit Längselement-Auflageflächen (27), diese
nach vorn begrenzenden, aufwärts gerichteten Vorsprüngen (26) bzw. mit unteren, zur Frontseite hin
offenen Ausnehmungen (16) versehen sind.

15. Bauelementsystem nach einem der vorhergehenden Ansprüche, dadurch gekennzeichnet, daß die Stützböcke
(13) unter Zwischenfügung von Zementmörtel übereinandergesetzt sind.

16. Bauelementsystem nach einem der vorhergehenden Ansprüche, dadurch gekennzeichnet, daß zur Verbesserung
des Reibschlusses zwischen den zu einem Stapel übereinander gesetzten Stützböcken (13) und in Abhängigkeit von den Eigenschaften des abzufangenden Erdreiches
auf der Etagenhöhe eines verkürzten Stützbockes (13d) des einfachen Höhentaktmaßes benachbarte Stützbockstapel überspannende Längselemente (1o) zur Bildung
von das Erdreich-Auflastgewicht übertragenden
Trögen mit dem Brüstungsteil (12) flach auf einen
unteren Stützbock aufgelegt und unter Verwendung
von Höhen-Abstandshaltern durch den nächst höheren
Stützbock überdeckt sind.

17. Bauelementsystem nach Anspruch 16, dadurch gekennzeichnet, daß zum gleichen Zweck der Beschwerung
im Hüllmaß mit Beton und Armierung gefüllte bzw.
ausgegossene Längselemente verwendet werden.

18. Bauelementsystem nach Anspruch 1, dadurch gekennzeichnet, daß die geneigten Profilstützen (4o) an
ihrer Sichtseite in mit dem Höhentaktmaß abgestimmten Abständen Aufnahmen (25) mit nach vorn
durch aufwärts gerichtete Vorsprünge (26) begrenzten Auflageflächen (27) für Längselemente
enthalten.

19. Bauelementsystem nach Anspruch 18, dadurch gekennzeichnet, daß innerhalb einer Hangabstützung oder
eines Walles Profilstützen (4o) und Stützbockstapel
als Auflage für Längselemente (1o) vorgesehen sind.

2o. Bauelementsystem nach Anspruch 18, dadurch gekennzeichnet, daß zur Erstellung von freistehenden
Mauern oder Lärmschutzwällen jeweils zwei Profilstützen (4o) mit entgegengesetzter Neigung aufgestellt und in Fundamenten aus Ortbeton verankert
sind.

-/-

21. Bauelementsystem nach Anspruch 1, dadurch gekennzeichnet, daß an dem auf Stützböcken (13) aufliegenden Schenkel der Längselemente (1o) aus der Schenkelebene vorspringende Anschläge, vorzugsweise in
Form von Kranhebeschlaufen, an solchen Stellen
angeformt sind, die sich an den benachbarten Innenseiten und/oder Außenseiten zweier aufeinanderfolgender Stützbockstapel befinden.

22. Bauelementsystem nach Anspruch 1, dadurch gekennzeichnet, daß die Längselemente (1o) an wenigstens
einem Ende mit einer senkrecht zu Bodenplatte (11)
und Brüstungsteil (12) angeformten Abschlußwand versehen sind.

0031154

Fig.1a

Fig.1b

Fig.1c

Fig.1d

Fig.2a

Fig.2b

Fig.2c

Fig.2d

Fig.3a

Fig.3b

Fig.3c

Fig.4a

Fig.4b

Fig.4c

Fig.5a    Fig.5b    Fig.5c    Fig.5d    Fig.5e

Fig.5f    Fig.5g    Fig.5h

0031154

Fig.6a    Fig.6b    Fig.6c    Fig.6d    Fig.6e

14°    27°    14°

Fig.6f    Fig.6g    Fig.7

27°    27°    27°    14°

Fig.8

13d

10

10

13d

10

13d

13a

13a

13

Fig.9

10

40

25

26

27

Fig.10a

Fig.10b

Fig.11

0031154

| | |
|---|---|
| Europäisches Patentamt | **EUROPÄISCHER RECHERCHENBERICHT** |

Nummer der Anmeldung

EP 80 10 8050

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 2 401 277</u> (NEUMANN) <br><br> * Seite 5, Zeilen 7-33; Seite 6, Zeilen 23-32; Seite 7, Zeilen 38-40; Seite 8, Zeilen 1-19, 32-40; Seite 9, Zeilen 1-40; Seite 10, Zeilen 1-15; Figuren 3,7-11,14-16. * <br><br>--- | 1-13 |
| | <u>DE - A - 2 030 854</u> (FINKLER) <br><br> * Seite 2, Zeilen 19-28; Seite 3, Spalten 1,2,4; Seite 4, Spalte 1; Seite 6, Zeilen 3-27; Figuren 1-10 * <br><br>--- | 1-3,7, 18,19 |
| | <u>FR - A- 2 409 350</u> (BOURDIN) <br><br> * Seite 4, Zeilen 14-40; Seite 5, Zeilen 1-8; Figur 1 * <br><br>--- | 1,18 |
| | <u>FR - A - 2 309 673</u> (NEUMANN) <br><br> * Figur 16 * <br><br>--- | 1,22 |
| | <u>DE - A - 2 532 520</u> (JANUS) <br><br> * Seite 9, Zeilen 10-17; Seite 11, Zeilen 1-9; Figuren 10-14 * <br><br>-------- | 18,20 |

**KLASSIFIKATION DER ANMELDUNG** (Int. Cl.³)

E 02 D 29/02
E 01 F  8/00
E 02 D 17/20
A 01 G  9/00

**RECHERCHIERTE SACHGEBIETE** (Int. Cl.³)

E 02 D
E 01 F
A 01 G

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27.03.1981 | RUYMBEKE |

EPA form 1503.1  06.78